# EUROPEAN PATENT SPECIFICATION

(11) **EP 0 695 761 B1**
(45) Date of publication and mention of the grant of the patent: **29.09.1999**
(21) Application number: 94119309.6
(22) Date of filing: 07.12.1994
(51) Int. Cl.: C08F 2/00, C08G 8/10, C08F 14/06, C08F 18/08

(54) **Build-up suppressor agent, compositons containing it and method of use in polymerization processes**
Mittel zur Verhinderung von Belagbildung, Zusammensetzungen dieses enthaltend und Anwendungsverfahren für Polymerisationsprozesse
Agent pour empêcher la formation de dépôts, compositions le contenant et méthode pour l'utilisation dans des procédés de polymérisation

(30) Priority: 05.08.1994 IT MI941706
(43) Date of publication of application: 07.02.1996
(73) Proprietor: 3V SIGMA S.p.A, 20121 Milano (IT)
(72) Inventor: Quintini, Massimo, I-24100 Bergamo (IT)
(74) Representative: Minoja, Fabrizio, Dr.

(56) References cited:
- CA-A- 1 181 899
- US-A- 4 355 141
- US-A- 4 431 783

## Description

The present invention relates to build-up suppressor agents and compositions containing such suppressor agents, which are capable of inhibiting the formation of build-up in vinyl acetate or vinyl chloride polymerization processes, or in polymerization processes utilizing a mixture thereof, with or without other vinyl monomers polymerizable therewith, which processes are effected in aqueous suspension, aqueous emulsion or in bulk.

### BACKGROUND OF THE INVENTION

In all the above polymerization processes, part of the formed polymer tenaciously adheres to the reactor walls, thus forming so-called "build-up", with deleterious effects toward both the final product itself, due to small fragments of build-up which, by detaching from the reactor walls, can be included in the polymerized product and the safety of the reaction because the build-up slows the thermal exchange of the wall giving rise to safety problems for overheating.

This build-up increases with repeated polymerization operations and eventually it becomes necessary to clean the walls after each repeated reaction.

This cleaning is costly as it decreases the plant output and is dangerous for the operators due to the toxicity of the monomers, particularly vinyl chloride. Thus, the cleaning is carried out as infrequently as possible.

A number of products and techniques have been developed to mitigate this problem, all of which are based on coating the reactor walls with products which inhibit adhesion of the build-up or even its formation, by impeding the polymerization of the monomers on the reactor walls. Phenol-formaldehyde condensation products (GB 1439339; JP 54-107991; CA 1181899; EP 0052421) or dye mixtures (alizarine, xanthones, natural flavonoids, naphthoquinones, hydroxyanthraquinones and others) with film-forming elements such as polysaccharides, polyvinyl alcohols, polyvinylpyrrolidone were proposed as reactor wall coating. See for example patents JP 04342701; JP 04154804; JP 04154801; JP 04154805; JP 04108805; JP 04159302 and JP 04031402.

According to the literature, the products disclosed in EP 0052421 are particularly effective. All these products, in the industrial practice, are applied to the polymerization reactor walls in the form of a liquid, e.g. aqueous solutions, by means of spraying, using compressed nitrogen, or preferably water vapour, at pressures of 5-15 bar as the propellant for the solution.

The build-up inhibitors, dissolved in the sprayable liquid, adhere to the reactor walls forming a very thin coating. However, part of the aqueous vehicle, flowing along the walls, gathers on the bottom of the reactor, carrying with it part of the inhibitor which is therefore lost to the purposes of its preventive action on the formation of the build-up.

In addition to this economic loss , a technical difficulty occurs. In fact, the build-up inhibitors which have not adhered to the wall can interfere with the quality of the acetate or vinyl chloride polymers and copolymers obtained during a subsequent polymerization, e.g. deteriorated colour, decreased thermostability, and can also interact negatively with the initiator, suspending and dispersing agents and emulsifiers, used in the polymerization processes, causing the formation of anomalous lumps of particles and instability of the polymerization system.

### SUMMARY OF THE INVENTION

It has now been found that if the phenol/formaldehyde condensation products, such as for example those cited in EP 0052421 and in JP-A-54-107991 are prepared in the presence of suitable carboxylation agents, or subsequently reacted with suitable carboxylation agents, a chemical modification of these condensates occurs, on the nature of which modification only hypotheses can be made being not even completely explained the structure of the starting precondensate which gives to the new products an improved adhesion capacity to the reactor walls and a higher specific anti build-up activity, with reduced sensitivity to pH variations of the polymerization processes. Moreover, the polymers obtained from polymerization carried out in reactors with such protected walls, show better physical characteristics.

Therefore the present invention relates to the following objects:
a) a build-up suppressor agent;
b) compositions containing said agent;
c) a method for inhibiting the build-up in a polymerization reactor;
d) a polymerization process; and
e) a polymer obtainable from said process.

### DETAILED DISCLOSURE OF THE INVENTION

The phenol compound suitable for the present invention must have the ortho- and para-positions to the phenol function unsubstituted.

The carboxylation agents useful for the purposes of the present invention are preferably aliphatic organic acids containing at least two carboxyl groups, as for example, one or more of oxalic, malonic, succinic acids, or carboxyl groups and hydroxyl groups, as for example citric and tartaric acids. Particularly suitable is citric acid.

This improved specific activity can moreover be further enhanced if the above mentioned products include polyvinyl alcohols having high hydroxyl content.

The molar ratio between the phenol compound and formaldehyde is between 1:0.8 and 1:1.2.

The molar ratio between the starting phenol compound and the organic acid used in the present invention is between 1:1.5 and 1:0.5.

Preferred phenol compounds are phenol and alpha-naphthol.

The reaction between the polycarboxylic acids, phenols and formaldehyde, or between the polycarboxylic acids and pre-condensates between the phenols and the formaldehyde and, when used, the polyvinyl alcohols, takes place normally between 50 and 100°C, preferably between 75 and 95°C, in an aqueous solution. The reaction can be carried out also in situ, i.e. on the walls of the reactor or on any other part of the reactor that can come in contact with the vinyl acetate or chloride or with other polymerizable monomers, if any, also in their vapour form.

The polyvinyl alcohols suitable to the present invention are polyvinyl alcohols having a hydrolysis degree equal to or higher than 96%, preferably 98% or more, and having a viscosity, in 4% aqueous solution, determined with Hoppler viscosimeter, of 20 mPa.s or more, preferably 40 mPa.s or more.

The amount of polyvinyl alcohol to be used in the manufacture of these new build-up suppressor agents is between 2% and 20% by weight, based on the weight of the phenol-formaldehyde condensation product.

According to the present invention, the build-up suppressor agents are obtainable in various ways.

The phenol compound may be reacted directly with formaldehyde in the above mentioned conditions in the presence of the carboxylation agent.

Alternatively, the formation of the condensate is carried out by reacting the phenol compound and formaldehyde in alkaline conditions, e.g, a pH of between 8 and 12, and subsequently the condensate is treated with the carboxylation agent. In the case the above mentioned polyvinyl alcohol is used, the condensation between the phenol compound and formaldehyde takes place in the presence of the polyvinyl alcohol in alkaline conditions, e.g. a pH of between 8 and 12, and finally the reaction with said carboxylation agent is carried out.

In the case of in situ preparation of the build-up suppressor agent, it is obtained in the form of a 4% w/w aqueous solution.

With respect to the already mentioned advantages, namely better adhesion of the suppressor agents and the non interference with the quality of the polymers to be made, the new build-up suppressor agents also have the advantage of being easily obtained in solid, handy and easily preservable form.

As opposed to this, the well known phenol-formaldehyde derivatives, particularly those described in EP 0 052 421, are obtainable only in the form of a solution, which must be stored in a manner such as to be shielded from air. Atmospheric oxygen quickly oxides these known solutions, giving them a deep colour, probably corresponding to the quinone form of the phenols contained therein and transforming the phenol-formaldehyde condensates into water insoluble products which are, therefore, no longer useful. Such rapid oxidation does not takes place on the present solid product, obtained according to the present invention. The solution suitable for application on the reactor walls can be prepared at the moment of use by dissolving the product in water and alkali, e.g. a pH of between 8 and 13, which operation is very easy due to the presence of the carboxyl groups.

The concentration of the suppressor agents in the aqueous solution for use in the application on the reactor walls is between 3 and 15%, preferably between 5 and 9% by weight of the solution.

The amount of the build-up suppressor agents of the present invention which is to be applied on the reactor walls is particularly low, up to not more than 0.4 g of active substance per m² of surface and as low as 0.04 g per m² of surface.

The product, after being dissolved by means of alkali as for example sodium hydroxide, potassium hydroxide or hydroxides of alkali-earth metals or also by means of ammonia or lower aliphatic amines or mono-di-tetraethanolamine, is generally applied by means of the known vapour-spraying technique, but can also be applied by brush or, in the case of vinyl chloride, using the monomer itself as a carrier. The application can be carried out on hot or cold walls, using pre-warmed or room temperature solutions, although the temperature is not critical.

The vinyl acetate and vinyl chloride polymerizations which are referred to in the present invention are homopolymerizations or copolymerizations with one or more copolymerizable monomers as for example other vinyl esters or aryl, alkyl, cycloalkyl esters of mono or polycarboxylic unsaturated acids having 3-15 carbon atoms.

The process of the invention is particularly useful when applied to polymerizations in aqueous suspension or emulsion, but also in bulk polymerizations the reduction of the build-up on the walls occurs.

In the suspension polymerizations of vinyl acetate and chloride, suspending agents with colloidal-protective properties are used, as for instance partially hydrolyzed polyvinyl alcohols, cellulosic ethers, gelatine, fatty acids esters of sorbitole.

The amounts used are generally between 0.05% and 2% by weight on the total amount of the monomers.

In the emulsion polymerizations, surfactants as polyglicolic ethers of the nonyl-phenol or sodium or ammonium salts of C₁₂-C₁₈ fatty acids, alkylphosphates, alkylsulfosuccinates, sulfonated alkylbenzenes, sulfonated olefins, sulfuric esters of fatty alcohols are used as emulsifying agents.

The amounts generally vary between 0.05% and 0.5% by weight based on the total of the monomers.

Any suitable polymerization initiator which is soluble in the vinyl monomers can be used. Examples of these catalysts, in the suspension polymerizations, are peroxides such as lauroyl peroxide, acetylcyclohexylsulfonyl peroxide, azo compounds such as azo-bis(dimethylvaleronitrile) and peroxodicarbonates such as dicetylperoxodicarbonate, diisopropylperoxodicarbonate. These initiators and every other conventional agent can be used in the usual amounts of 0.01%-1% w/w, based on the total amount of the monomers.

In emulsion polymerization, oleosoluble initiators, such as diacyl or dialkyl peroxides, as lauroyl or benzoyl peroxide, per-esters such as the t-butyl peroxypivalate or t-butyl per-2-ethylhexanoate, peroxidicarbonate or dicetyl peroxidicarbonate or hydrosoluble redox initiating systems based on persulfates, hydrogen peroxide, hydroperoxides combined with sodium metabisulfite, sulfoxylated sodium formaldehyde can be used.

Polymerization operative conditions are those well known and commonly used for the vinyl acetate and chloride emulsion and suspension polymerization.

The temperatures are within the range 40-80°C and the pressure is generally between 5 and 14 bar for the vinyl chloride and between 65 and 95°C and at atmospheric pressure for vinyl acetate.

The following examples further illustrate the invention.

### EXAMPLE 1

### Preparation of build-up suppressor agents.

In an internally glass lined reactor, equipped with a reflux condenser, a Pfaudler stirrer, cooling and warming system, the following ingredients were loaded in parts by weight:

| | |
|---|---|
| water | 500 |
| 1-naphthol (equal to 0.7 moles) | 100 |
| polycarboxylic aliphatic acid | 0.6 moles |

The suspension was warmed to 98°C and stirred for three hours at this temperature.

Subsequently, 70 parts by weight of 30% formaldehyde were added within 70 minutes and the temperature was maintained for three hours. At the end, the mixture was cooled down to 25°C and the solid was recovered by filtration.

According to this process, the products derived from the following acids were prepared:

| | |
|---|---|
| oxalic acid | (Example 1A) |
| malonic acid | (Example 1B) |
| succinic acid | (Example 1C) |
| citric acid | (Example 1D) |
| tartaric acid | (Example 1E) |

### EXAMPLE 2

### Preparation of build-up suppressor agents.

In an internally glass lined reactor, equipped with a reflux condenser, a Pfaudler stirrer, cooling and warming system, the following ingredients were loaded in parts by weight:

| | |
|---|---|
| water | 600 |
| 1-naphthol (equal to 0.7 moles) | 110 |
| 30% caustic soda | 93 |

The suspension was warmed to 80°C till to obtain a solution. Subsequently, 80 parts by weight of 30% formaldehyde were added within about 70 minutes, raising the temperature to 95°C and stirring for a further hour .

Then, 0.55 moles of polycarboxylic aliphatic acid were added and the mixture was warmed at 95°C for further two hours. At the end, the mixture was cooled down to 25°C and the solid was recovered by filtration.

According to this process, the products derived from the following acids were prepared:

| | |
|---|---|
| oxalic acid | (Example 2A) |
| malonic acid | (Example 2B) |
| succinic acid | (Example 2C) |
| citric acid | (Example 2D) |
| tartaric acid | (Example 2E) |

### EXAMPLE 3

### Preparation of build-up suppressor agents.

In an internally glass lined reactor, equipped with a reflux condenser, a Pfaudler stirrer, cooling and warming system, the following ingredients were loaded in parts by weight:

| | |
|---|---|
| water | 500 |
| phenol | 66 (equal to 0.7 moles) |
| polycarboxylic aliphatic acid | 0.6 moles |

The suspension was warmed to 98°C and stirred for three hours at this temperature.

Subsequently, 70 parts by weight of 30% formaldehyde were added within 70 minutes and the temperature was maintained for three hours. At the end, the mixture was cooled down to 25°C and the solid was recovered by filtration.

According to this process, the products derived from the following acids were prepared:

| | |
|---|---|
| oxalic acid | (Example 3A) |
| malonic acid | (Example 3B) |
| succinic acid | (Example 3C) |
| citric acid | (Example 3D) |
| tartaric acid | (Example 3E) |

### EXAMPLE 4

### Preparation of build-up suppressor agents.

In an internally glass lined reactor, equipped with a reflux condenser, a Pfaudler stirrer, cooling and warming system, the following ingredients were loaded in parts by weight:

| | |
|---|---|
| water | 600 |
| phenol (equal to 0.7 moles) | 66 |
| 30% caustic soda | 93 |

The suspension was warmed to 90°C till to obtain a solution. Subsequently, 80 parts by weight of 30% formaldehyde were added within about 90 minutes, maintaining the temperature at 90°C and stirring for a further hour .

Then, 0.55 moles of polycarboxylic aliphatic acid were added and the mixture was warmed at 95°C for further two hours.

At the end, the mixture was cooled down to 25°C and the solid was recovered by filtration.

According to this process, the products derived from the following acids were prepared:

| | |
|---|---|
| oxalic acid | (Example 4A) |
| malonic acid | (Example 4B) |
| succinic acid | (Example 4C) |
| citric acid | (Example 4D) |
| tartaric acid | (Example 4E) |

### EXAMPLE 5

### Polymerization of vinyl acetate monomer (VAM) in aqueous suspension.

In a stainless steel 25 liter-reactor, equipped with a reflux condenser and anchor stirrer, the following ingredients were loaded in parts by weight:

| | |
|---|---|
| VAM | 100 |
| Water | 50 |
| PVOH (26/88) | 0.05 |
| Acetaldehyde | 0.4 |
| Sodium acetate | 0.01 |
| Benzoyl peroxide | 0.03 |

The mixture was warmed to reflux at atmospheric pressure and the polymerization was carried out for 4 hours until a conversion not lower than 99% was reached.

According to this procedure several polymerizations were carried out with and without the build-up suppressor agents of the present invention being present. The agents were applied in the amount of 0.3 g of active matter per m² of reactor surface. The build-up amount was determined after emptying and washing the reactor, collecting and weighing it.

The obtained results are reported in the following Table 1, and are expressed as part per million (ppm) referred to the loaded monomers.

**TABLE 1**

| Example | Coating type | Application mode | Build-up (ppm) |
|---|---|---|---|
| 5A | none | --- | 12,000 |
| 5B | 1C | spray | 515 |
| 5C | 1B | spray | 1,750 |
| 5D | 2B | spray | 975 |
| 5E | 1D | spray | 10 |
| 5F | 4D | spray | 110 |
| 5G | 2C | spray | 215 |
| 5H | 2E | spray | 80 |
| 5I | 4C | spray | 1,600 |
| 5L | 3B | spray | 2,010 |
| 5M | 2A | spray | 875 |
| 5N | 2D | vapour | 10 |
| 5O | 1E | vapour | 175 |
| 5P | 3D | vapour | 425 |

### EXAMPLE 6

### polymerization of vinyl chloride monomer (VCM) in aqueous suspension.

In a internally glass lined 100 liter-reactor, equipped with Pfaudler stirrer, after having eliminated oxygen, the following ingredients were loaded in parts by weight:

| | |
|---|---|
| VCM | 100 |
| Water | 150 |
| Polyvic S 404 W® | 0.04 |
| Polyvic SP 808® | 0.04 |
| Methylhydroxypropylcellulose | 0.04 |
| Sodium hydrogencarbonate | 0.03 |
| Bis(4-tert-butylcyclohexyl)peroxy dicarbonate | 0.04 |

The system was warmed to 54°C, corresponding to a K value of the PVC polymer of about 70, while the pressure raised to 7-8 metric atmospheres and the polymerization was carried out for about 7 hours. When the pressure decreased of 2-3 metric atmospheres, the reaction was interrupted venting out the unreacted monomer and recovering it.

According to this procedure several polymerizations were carried out with and without the build-up suppressor agents of the present invention being present. Moreover, further two polymerizations were carried out but using as build-up suppressing agents the products disclosed in Example 1 of EP 0052421 (herein Examples 6H and 6I).

The build-up suppressors were applied in the amount of 0.25 g of active matter per m² of reactor surface. The build-up amount was determined after emptying and washing the reactor, collecting and weighing it. The obtained results are reported in the Table 2 below and are expressed as part per million (ppm) referred to the loaded monomer.

**TABLE 2**

| Example | Coating type | Application mode | Build-up (ppm) |
|---|---|---|---|
| 6A | none | --- | 6,500 |
| 6B | 2D | spray | traces |
| 6C | 2E | spray | 25 |
| 6D | 4D | spray | 75 |
| 6E | 4E | spray | 80 |
| 6F | 1D | spray | traces |
| 6G | 2B | spray | 215 |
| 6H | EP0052421 | spray | 530 |
| 6I | EP0052421 | vapour | 310 |

PVCs obtained from Examples 6A, 6B, 6H, 6I was stabilized against thermo-oxidative degradation with calcium and zinc stearate and were pressure-molded into plates having 1.5 mm thickness. The yellow index (YI) of the plates was measured with a reflection spectrophotometer obtaining the values reported in Table 3 below:

**TABLE 3**

| Example | YI |
|---|---|
| 6A | 7.8 |
| 6B | 7.7 |
| 6H | 10 |
| 6I | 10.5 |

The polymers obtained according to the present invention showed better appearance.

### EXAMPLE 7

### Copolymerization of vinyl acetate monomer (VAM)/Vinyl esters in aqueous dispersion.

In a stainless steel 25 liter-reactor, equipped with a reflux condenser and anchor stirrer, the 30% of the monomer mixture below described and the 50% of the redox initiator system were loaded in parts by weight:

| | |
|---|---|
| VAM | 70 |
| Dibutyl maleate | 30 |
| Water | 70 |
| Hydroxyethylcellulose (WP 300) | 2 |
| Ethoxylated nonyl-phenol | 2.3 |
| NaHCO₃ | 0.07 |
| tert-Butylhydroperoxide | 0.18 |
| Sodium formaldehyde sulfoxilate | 0.089 |

The mixture was warmed to reflux at atmospheric pressure and the remaining of the matter was loaded within 5 hours at the temperature of 85°C.

After completion of the reaction, cooling and unloading of the reactor, the latter was washed with water at 5 metric atmospheres.

According to this procedure several polymerizations were carried out with and without the build-up suppressor agents of the present invention being present. The agents were applied in the amount of 0.35 g of active matter per m² of reactor surface. The build-up amount was determined after emptying and washing the reactor, collecting and weighing them.

The obtained results are reported in the following Table 4, and are expressed as part per million (ppm) referred to the loaded monomers.

**TABLE 4**

| Example | Coating type | Application mode | Build-up (ppm) |
|---|---|---|---|
| 7A | none | --- | 21,000 |
| 7B | 2D | spray | 60 |
| 7C | 1E | spray | 220 |

### EXAMPLE 8

Copolymerization of vinyl chloride monomer (VCM)/vinyl acetate monomer (AVM) in aqueous suspension.

In a internally glass lined 100 liter-reactor, equipped with Pfaudler stirrer, after having eliminated oxygen, the following ingredients were loaded in parts by weight:

| | |
|---|---|
| VCM | 85 |
| AVM | 15 |
| Water | 150 |
| Polyvic S 404 W® | 0.07 |
| Polyvic SP 808® | 0.2 |
| Gohsenol KH17® | 0.03 |
| Sodium hydrogencarbonate | 0.05 |
| Bis(4-tert-butylcyclohexyl)peroxy dicarbonate | 0.025 |
| Lauroyl peroxide | 0.04 |

The system was warmed to 62°C, corresponding to a K value of the VCM/VAM copolymer of 58. The polymerization was carried out for about 8 hours until an 85% monomer conversion was achieved.

According to this procedure several polymerizations were carried out with and without the build-up suppressor agents of the present invention being present. The agents were applied in the amount of 0.4 g of active matter per m² of reactor surface. The results are reported in Table 5 below.

**TABLE 5**

| Example | Coating type | Application mode | Build-up (ppm) |
|---|---|---|---|
| 8A | none | --- | 15,750 |
| 8B | 3D | spray | 15 |
| 8C | 1E | spray | 275 |

### EXAMPLE 9

### In-situ preparation of a build-up suppressor agent.

In an internally glass lined reactor, equipped with a reflux condenser, a Pfaudler stirrer, cooling and warming system, the following ingredients were loaded in parts by weight:

| | |
|---|---|
| water | 600 |
| l-naphthol (equal to 0.7 moles) | 110 |
| 30% caustic soda | 93 |

The suspension was warmed to 80°C to obtain a solution. Subsequently, 80 parts by weight of 30% formaldehyde were added within 70 minutes raising the temperature to 95°C and stirring was maintained for one hour. The obtained solution, having a solid content of about 20%, was diluted with water till 4% solid content and was added with 0.5 moles of citric acid, keeping pH at 11/13 with sodium hydroxide.

The new solution was sprayed by nitrogen pressure on a 25 liter-reactor walls, which were kept at 90°C by heating the reactor jacket, in the amount of 0.4 mg/m².

In the coated reactor a polymerization of the VAM was carried out according to the procedure of the example 5. The build-up collected according to the usual method was 220 ppm.

In the so treated reactor, the polymerization of vinyl acetate monomer was carried out according to the procedure of Example 5.
The amount of build-up collected was 220 ppm.

### EXAMPLE 10

### Preparation of a build-up suppressor agent.

In an internally glass lined reactor, equipped with a reflux condenser, a Pfaudler stirrer, cooling and warming system, the following ingredients were loaded in parts by weight:

| | |
|---|---|
| water | 500 |
| 1-naphthol (equal to 0.7 moles) | 100 |
| Sodium hydroxide | 22 |

The suspension was warmed to 98°C and stirred for three hours at this temperature.

Subsequently, 70 parts by weight of 30% formaldehyde were added within 70 minutes and the temperature was maintained for three hours. At the end, the mixture was cooled down to 25°C and 140 parts by weight of a 10% water solution of PVAOH (Polyvinylalcohol) having a saponification degree of 98% and a viscosity of a 4% aqueous solution of 40 mPa.s were added. After a maturation period of three hours at 90°C the system was cooled to 80°C, added with 0.6 moles of polycarboxylic acid and warmed for further two hours. The formed suspension was cooled and the solid was recovered by filtration and dried.

According to this process, the products derived from the following acids were prepared:

| | |
|---|---|
| oxalic acid | (Example 10A) |
| malonic acid | (Example 10B) |
| succinic acid | (Example 10C) |
| citric acid | (Example 10D) |
| tartaric acid | (Example 10E) |

### EXAMPLE 11

### Preparation of build-up suppressor agents.

In an internally glass lined reactor, equipped with a reflux condenser, a Pfaudler stirrer, cooling and warming system, the following ingredients were loaded in parts by weight:

| | |
|---|---|
| water | 600 |
| phenol (equal to 0.7 moles) | 66 |
| 30% Sodium hydroxide | 93 |

The suspension was warmed to 90°C to obtain a solution. Subsequently, 80 parts by weight of 30% formaldehyde were added within 90 minutes always keeping the temperature at 90°C and stirring was maintained for one hour. At the end, the mixture was cooled down to 25°C and 90 parts by weight of a 10% water solution of a PVAOH having a saponification degree of 96% and a 4% solution viscosity of 30 mPa.s were added. After a maturation period of three hours at 90°C the system was cooled. 0.55 moles of polycarboxylic aliphatic acid were added and the system was warmed to 95°C for further two hours. The formed suspension was cooled to 25°C and the solid was recovered by filtration.

According to this process, the products derived from the following acids were prepared:

| | |
|---|---|
| oxalic acid | (Example 11A) |
| malonic acid | (Example 11B) |
| succinic acid | (Example 11C) |
| citric acid | (Example 11D) |
| tartaric acid | (Example 11E) |

### EXAMPLE 12

### Polymerization of vinyl acetate monomer (VAM) in aqueous suspension.

In a stainless steel 25 liter-reactor, equipped with a reflux condenser and anchor stirrer, the following ingredients were loaded in parts by weight:

| | |
|---|---|
| VAM | 100 |
| Water | 50 |
| PVOH (26/88) | 0.05 |
| Acetaldehyde | 0.4 |
| Sodium acetate | 0.01 |
| Benzoyl peroxide | 0.03 |

The mixture was warmed to reflux at atmospheric pressure and the polymerization was carried out for 4 hours until a conversion not lower than 99% was reached.

According to this procedure several polymerizations were carried out with and without the build-up suppressor agents of the present invention being present. The agents were applied in the amount of 0.3 g of active matter per m² of reactor surface in the form of 5% solution in 1% aqueous sodium hydroxide. The solution were applied by whether nitrogen or vapour spraying. Build-up amount was determined after emptying and washing the reactor, collecting and weighing them.

The obtained results are reported in the following Table 6, and are expressed as part per million (ppm) referred to the loaded monomers.

**TABLE 6**

| Example | Coating type | Application mode | Build-up (ppm) |
|---|---|---|---|
| 12A | none | --- | 15,000 |
| 12B | 10C | spray | 485 |
| 12C | 10B | spray | 1,520 |
| 12D | 11B | spray | 1,020 |
| 12E | 10D | spray | not detectable |
| 12G | 11C | spray | 250 |
| 12H | 11E | spray | 75 |
| 12M | 11A | spray | 830 |
| 12N | 11D | vapour | not detectable |
| 12O | 10E | vapour | 160 |
| 12P | 10A | vapour | 350 |

### EXAMPLE 13

### Polymerization of vinyl chloride monomer (VCM) in aqueous suspension.

In a internally glass lined 100 liter-reactor, equipped with Pfaudler stirrer, after having eliminated oxygen, the following ingredients were loaded in parts by weight:

| | |
|---|---|
| VCM | 100 |
| Water | 150 |
| Polyvic S 404 W | 0.04 |
| Polyvic SP 808 | 0.04 |
| Methylhydroxypropylcellulose | 0.04 |
| Sodium hydrogencarbonate | 0.03 |
| Bis(4-tert-butylcyclohexyl)peroxy dicarbonate | 0.04 |

The system was warmed to 54°C, corresponding to a K value of the PVC polymer of about 70, while the pressure raised to 7-8 metric atmospheres and the polymerization was carried out for about 7 hours. When the pressure decreased of 2-3 metric atmospheres, the reaction was interrupted by exhausting the non reacted monomer and recovering it.

According to this procedure several polymerizations were carried out with and without the build-up suppressor agents of the present invention being present. Moreover, further two polymerizations were carried out but using as build-up suppressing agents the products disclosed in Example 1 of EP 0052421 (herein Examples 13H and 13I),

The build-up suppressing agents were applied in the amount of 0.25 g of active matter per square meter of surface after having prepared 5% solutions in 1% aqueous sodium hydroxide. The solutions were sprayed on the walls by whether nitrogen or vapour spraying.

The results are reported in Table 7 below.

**TABLE 7**

| Example | Coating type | Application mode | Build-up (ppm) |
|---|---|---|---|
| 13A | none | --- | 7,200 |
| 13B | 11D | spray | not detectable |
| 13C | 11E | spray | 35 |
| 13D | 10B | spray | 95 |
| 13E | 10E | spray | 70 |
| 13F | 10D | spray | not detectable |
| 13G | 11B | spray | 255 |
| 13H | EP0052421 | spray | 420 |
| 13I | EP0052421 | vapour | 350 |

PVC obtained from Examples 13A, 13B, 13H, 13I was stabilized against thermo-oxidative degradation with calcium and zinc stearate and were pressure-molded into plates having 1.5 mm thickness. Yellow index (YI) of the plates was measured with a reflection spectrophotometer obtaining the values reported in Table 8 below:

**TABLE 8**

| Example | YI |
|---|---|
| 13A | 7.6 |
| 13B | 7.8 |
| 13H | 9.5 |
| 13I | 10 |

The polymers obtained according to the present invention showed better appearance.

### EXAMPLE 14

### In-situ preparation of a build-up suppressor agent.

In an internally glass lined reactor, equipped with a reflux condenser, a Pfaudler stirrer, cooling and warming system, the following ingredients were loaded in parts by weight:

| | |
|---|---|
| water | 600 |
| 1-naphthol (equal to 0.7 moles) | 110 |
| 30% caustic soda | 93 |

The suspension was warmed to 80°C to obtain a solution. Subsequently, 80 parts by weight of 30% formaldehyde were added within 70 minutes raising the temperature to 95°C and stirring was maintained for one hour. The solution was cooled to 25°C and 90 parts by weight of a water solution containing 10% PVAOH, having a saponification degree of 98% and a viscosity of a 4% water solution of 40mPa.s, were added. After a maturation period of three hours at 90°C, the solution was cooled. The obtained solution was diluted with water till 4% solid content and was added with 0.5 moles of citric acid, keeping pH at 11/13 with sodium hydroxide.

The new solution was sprayed by nitrogen pressure on a 25 liter-reactor walls, which were kept at 90°C by heating the reactor jacket, in the amount of 0.4 g of active matter per m². In the so treated reactor, the polymerization of vinyl acetate monomer was carried out according to the procedure of Example 12. The amount of build-up collected was 50 ppm.

## Claims

1. A build-up suppressor agent useful in vinyl acetate and/or vinyl chloride polymerization, comprising a condensation product of a phenol compound and formaldehyde, wherein the phenol compound has the ortho- and para-positions unsubstituted with respect to the phenol function, and a carboxylation agent.

2. An agent according to claim 1, wherein the carboxylation agent is an organic aliphatic acid having at least two carboxyl groups.

3. An agent according to claim 2, wherein the organic acid is selected from the group consisting of oxalic, malonic, succinic, citric and tartaric acid.

4. An agent according to claim 3, wherein the organic acid is citric acid.

5. An agent according to claim 1, wherein a molar ratio between the phenol compound and the carboxylation agent is between 1:1.5 and 1:0.5.

6. An agent according to claim 1, wherein the phenol compound is phenol.

7. An agent according to claim 1, wherein the phenol compound is alpha-naphthol.

8. An agent according to claim 1, wherein the molar ratio between the phenol compound and formaldehyde is between 1:0.8 and 1:1.2.

9. A method for producing the suppressor agent of claim 1, comprising condensing the phenol compound and the formaldehyde in the presence of the carboxylation agent at temperatures between 50 and 100°C.

10. An agent according to claim 1, wherein the suppressor agent includes a polyvinyl alcohol having a hydrolysis degree not lower than 96% and a 4% water-viscosity not lower than 20 mPa.s.

11. An agent according to claim 10, wherein the polyvinyl alcohol is present in an amount based on said condensation product of between 2 and 20% by weight.

12. An agent according to claim 10, wherein the polyvinyl alcohol has a hydrolysis degree higher than or equal to 98% and 4% aqueous solution viscosity higher than or equal to 40 mPa.s.

13. A method according to claim 9, wherein the phenol compound is condensed with the formaldehyde in the presence of said carboxylation agent.

14. A method according to claim 9, wherein the phenol compound is condensed with the formaldehyde in alkaline conditions, and then treated with said carboxylation agent.

15. An agent obtainable according to the method of claim 14.

16. A method according to claim 9, wherein the phenol compound is condensed with the formaldehyde in alkaline conditions, polyvinyl alcohol is added thereto, and then treated with the carboxylation agent.

17. An agent obtainable according to the method of claim 16.

18. An agent according to claim 1, wherein the suppressor agent is in the form of a 4% w/w alkaline aqueous solution.

19. A composition having anti build-up activity, containing the agent of claim 1 and a carrier therefor.

20. A composition according to claim 19, in the form of an alkaline aqueous solution containing from 3 to 15% by weight of said agent.

21. A method of treating vinyl acetate and/or vinyl chloride polymerization reactor surfaces such as to render the surfaces resistant to formation of build-up therein, comprising applying to said surfaces the suppressor agent of claim 1.

22. A method according to claim 21, wherein an amount of said agent applied to the surfaces is not higher than 0.4 g per m² of surface to be treated.

23. A polymerization or copolymerization process of vinyl acetate, vinyl esters or vinyl chloride monomers, comprising carrying out the process in a reactor treated according to the method of the claim 21.

## Patentansprüche

1. Aufbau (build up)-Supressor-Mittel, das bei der Vinylacetat- und/oder Vinylchlorid-Polymerisation von Nutzen ist, umfassend ein Kondensationsprodukt einer Phenolverbindung und Formaldehyd, wobei in der Phenolverbindung die ortho- und para-Positionen, bezogen auf die Phenolfunktion, unsubstituiert sind, und ein Carboxylierungsmittel.

2. Mittel nach Anspruch 1, dadurch **gekennzeichnet**, daß das Carboxylierungsmittel eine organische aliphatische Säure mit wenigstens zwei Carboxylgruppen ist.

3. Mittel nach Anspruch 2, dadurch **gekennzeichnet**, daß die organische Säure ausgewählt ist aus der Gruppe bestehend aus Oxalsäure, Malonsäure, Bernsteinsäure, Citronensäure und Weinsäure.

4. Mittel nach Anspruch 3, dadurch **gekennzeichnet**, daß die organische Säure Citronensäure ist.

5. Mittel nach Anspruch 1, dadurch **gekennzeichnet**, daß das molare Verhältnis zwischen der Phenolverbindung und dem Carboxylierungsmittel zwischen 1:1,5 und 1:0,5 liegt.

6. Mittel nach Anspruch 1, dadurch **gekennzeichnet**, daß die Phenolverbindung Phenol ist.

7. Mittel nach Anspruch 1, dadurch **gekennzeichnet**, daß die Phenolverbindung alpha-Naphthol ist.

8. Mittel nach Anspruch 1, dadurch **gekennzeichnet**, daß das molare Verhältnis zwischen der Phenolverbindung und Formaldehyd zwischen 1:0,8 und 1:1,2 liegt.

9. Verfahren zur Herstellung des Supressormittels nach Anspruch 1, umfassend die Kondensation der Phenolverbindung und des Formaldehyds in Gegenwart des Carboxylierungsmittels bei einer Temperatur zwischen 50 und 100°C.

10. Mittel nach Anspruch 1, dadurch **gekennzeichnet**, daß das Supressormittel einen Polyvinylalkohol enthält, der einen Hydrolysegrad von nicht weniger als 96% und eine 4% Wasserviskosität nicht niedriger als 20 mPa.s hat.

11. Mittel nach Anspruch 10, dadurch **gekennzeichnet**, daß der Polyvinylalkohol, bezogen auf das genannte Kondensationsprodukt, in einer Menge von 2 bis 20 Gew.-% vorhanden ist.

12. Mittel nach Anspruch 10, dadurch **gekennzeichnet**, daß der Polyvinylalkohol einen Hydrolysegrad größer gleich 98% und eine 4%-wäßrige-Lösungsviskosität größer gleich 40 mPa.s hat.

13. Verfahren nach Anspruch 9, dadurch **gekennzeichnet**, daß die Phenolverbindung mit dem Formaldehyd in Gegenwart des genannten Carboxylierungsmittels kondensiert wird.

14. Verfahren nach Anspruch 9, dadurch **gekennzeichnet**, daß die Phenolverbidnung mit dem Formaldehyd unter alkalischen Bedingungen kondensiert wird und dann mit dem genannten Carboxylierungsmittel behandelt wird.

15. Mittel erhältlich nach dem Verfahren von Anspruch 14.

16. Verfahren nach Anspruch 9, dadurch **gekennzeichnet**, daß die Phenolverbindung mit dem Formaldehyd unter alkalischen Bedingungen kondensiert wird, Polyvinylalkohol dazugegeben wird und dann mit dem Carboxylierungsmittel behandelt wird.

17. Mittel erhältlich nach dem Verfahren von Anspruch 16.

18. Mittel nach Anspruch 1, dadurch **gekennzeichnet**, daß das Suppressormittel in Form einer 4%igen Gew./Gew. alkalischen wäßrigen Lösung vorliegt.

19. Zusammensetzung mit einer Anti-Aufbau-Aktivität, enthaltend das Mittel von Anspruch 1 und einen Träger dafür.

20. Zusammensetzung nach Anspruch 19 in Form einer alkalischen wäßrigen Lösung, die 3 bis 15 Gew.-% des genannten Mittels enthält.

21. Verfahren zur Behandlung von Vinylacetat- und/oder Vinylchlorid-Polymerisationsreaktor-Oberflächen, um die Oberflächen im Reaktor gegenüber einer Aufbaubildung beständig werden zu lassen, umfassend das Aufbringen des Supressormittels nach Anspruch 1 auf die genannten Oberflächen.

22. Verfahren nach Anspruch 21, dadurch **gekennzeichnet**, daß die Menge des auf die Oberflächen aufgetragenen Mittels nicht größer als 0,4 g je m² zu behandelnder Oberfläche ist.

23. Polymerisations- oder Copolymerisationsverfahren von Vinylacetat-, Vinylester- oder Vinylchloridmonomeren, umfassend das Durchführen des Verfahrens in einem Reaktor, der nach dem Verfahren nach Anspruch 21 behandelt wurde.

## Revendications

1. Un agent inhibiteur de dépôt utile dans la polymérisation d'acétate de vinyle et/ou de chlorure de vinyle, comprenant un produit de condensation d'un composé phénolique et de formaldéhyde, les positions *ortho* et para par rapport à la fonction phénol du composé phénolique n'étant pas substituées, et un agent de carboxylation.

2. Un agent selon la revendication 1, dans lequel l'agent de carboxylation est un acide organique aliphatique ayant au moins deux groupes carboxyle.

3. Un agent selon la revendication 2, dans lequel l'acide organique est choisi dans la classe formée par les acides oxalique, malonique, succinique, citrique et tartrique.

4. Un agent selon la revendication 3, dans lequel l'acide organique est l'acide citrique.

5. Un agent selon la revendication 1, dans lequel le rapport molaire entre le composé phénolique et l'agent de carboxylation est compris entre 1:1,5 et 1:0,5.

6. Un agent selon la revendication 1, dans lequel le composé phénolique est le phénol.

7. Un agent selon la revendication 1, dans lequel le composé phénolique est l'alpha-naphtol.

8. Un agent selon la revendication 1, dans lequel le rapport molaire entre le composé phénolique et le formaldéhyde est compris entre 1:0,8 et 1:1,2.

9. Un procédé pour produire l'agent inhibiteur de la revendication 1, comprenant la condensation du composé phénolique et du formaldéhyde en présence de l'agent de carboxylation à des températures comprises entre 50 et 100°C.

10. Un agent selon la revendication 1, dans lequel l'agent inhibiteur comprend un alcool polyvinylique ayant un degré d'hydrolyse d'au moins 96 % et une viscosité à 4 % dans l'eau d'au moins 20 mPa.s.

11. Un agent selon la revendication 10, dans lequel l'alcool polyvinylique est présent en une quantité comprise entre 2 et 20 % en poids par rapport audit produit de condensation.

12. Un agent selon la revendication 10, dans lequel l'alcool polyvinylique a un degré d'hydrolyse supérieur ou égal à 98 % et une viscosité en solution aqueuse à 4 % supérieure ou égale à 40 mPa.s.

13. Un procédé selon la revendication 9, dans lequel le composé phénolique est condensé avec le formaldéhyde en présence dudit agent de carboxylation.

14. Un procédé selon la revendication 9, dans lequel on condense le composé phénolique avec le formaldéhyde dans des conditions alcalines, puis on traite avec ledit agent de carboxylation.

15. Un agent pouvant être obtenu selon le procédé de la revendication 14.

16. Un procédé selon la revendication 9, dans lequel on condense le composé phénolique avec le formaldéhyde dans des conditions alcalines, on y ajoute de l'alcool polyvinylique, puis on traite avec l'agent de carboxylation.

17. Un agent pouvant être obtenu selon le procédé de la revendication 16.

18. Un agent selon la revendication 1, dans lequel l'agent inhibiteur est sous la forme d'une solution aqueuse alcaline à 4 % en poids.

19. Une composition douée d'activité anti-dépôt, contenant l'agent de la revendication 1 et un véhicule pour celui-ci.

20. Une composition selon la revendication 19, sous la forme d'une solution aqueuse alcaline contenant 3 à 15 % en poids dudit agent.

21. Un procédé de traitement des surfaces d'un réacteur de polymérisation d'acétate de vinyle et/ou de chlorure de vinyle de manière à rendre ces surfaces résistantes à la formation de dépôts, comprenant l'application auxdites surfaces de l'agent inhibiteur de la revendication 1.

22. Un procédé selon la revendication 21, dans lequel la quantité dudit agent appliqué aux surfaces n'est pas supérieure à 0,4 g par m² de surface à traiter.

23. Un procédé de polymérisation ou copolymérisation d'acétate de vinyle, d'esters de vinyle ou de chlorure de vinyle monomères, comprenant l'exécution du procédé dans un réacteur traité selon le procédé de la revendication 21.
